# EUROPEAN PATENT APPLICATION

(11) **EP 4 576 324 A1**
(43) Date of publication of application: **25.06.2025**
(21) Application number: 24217844.0
(22) Date of filing: 05.12.2024
(51) Int. Cl.: H01M 10/48, H01M 10/6563, F04D 27/00, F04D 29/66

(54) **FAN ROTATION SPEED CONTROL METHOD FOR BATTERY ENERGY STATION AND BATTERY ENERGY STATION THEREOF**

(30) Priority: 19.12.2023 TW 112149525
(71) Applicant: Kwang Yang Motor Co., Ltd., Kaohsiung City 80794 (TW)
(72) Inventor: HOU, Yi-An, Kaohsiung (TW)
(74) Representative: Melchior, Robin

(57) **Abstract**

A fan rotation speed control method for a battery energy station (100) is applicable to the battery energy station (100) for storing and charging plural batteries (112). A first and a second fan rotation speed evaluation rules (142, 144), which are different, are provided, wherein the first and the second fan rotation speed evaluation rules (142, 144) each define a corresponding fan rotation speed at at least one temperature. A temperature is detected using a temperature sensor (120). The battery energy station (100) controls a rotation speed of at least one fan (130) according to the temperature and the first fan rotation speed evaluation rule (142). The battery energy station (100) determines whether a preset condition is met. When the preset condition is met, the battery energy station (100) controls the rotation speed of the fan (130) according to the temperature and the second fan rotation speed evaluation rule (144).

## Description

### BACKGROUND

The present invention relates to a fan rotation speed control method for a battery energy station and the battery energy station thereof, and in particular to a method of controlling a fan rotation speed of a battery energy station and the battery energy station thereof when a preset condition is met.

In recent years, with the growing awareness of environmental protection and the advancement of electric vehicle technology, the development of electric vehicles that use electricity as a power source to replace traditional vehicles powered by fossil fuels has gradually become an important trend in the automotive field, thus making electric vehicles more and more popular. In order to increase the cruising range and acceptance of electric vehicles, many countries or cities have begun planning to set up charging stations and battery swapping stations in public places to provide electric vehicles and/or electric motorcycles for charging or battery swapping, making the use of electric vehicles more convenient.

Whether it is a charging station or a battery swapping station, heat will be generated when the battery is charged. If the electronic equipment continues to operate at a high temperature, it is easy to produce abnormalities that will affect the service quality. Therefore, the fan in the equipment will automatically start to reduce the temperature. Inevitably, the fan will make noise, and the higher the fan rotation speed, the louder the noise will be.

Charging stations and battery swapping stations, especially those for electric motorcycles, may be located in residential areas to facilitate access to batteries. Therefore, how to control the fan rotation speed so that the operating noise of the charging station and battery swapping station does not cause inconvenience to the neighborhood of nearby households will become an important issue for the industry.

### SUMMARY OF THE INVENTION

In view of the above, the present invention provides a fan rotation speed control method for a battery energy station and the battery energy station thereof.

One embodiment of the present invention is a battery energy station having at least one temperature sensor for detecting a temperature, at least one fan, a battery charger rack system including a plurality of batteries, a data storage unit, and a processing unit. The data storage unit comprises a first fan rotation speed evaluation rule and a second fan rotation speed evaluation rule, wherein the first fan rotation speed evaluation rule and the second fan rotation speed evaluation rule are different, and the first fan rotation speed evaluation rule and the second fan rotation speed evaluation rule each define a corresponding fan rotation speed at at least one temperature. The processing unit is connected to the at least one temperature sensor, the at least one fan, the battery charger rack system, and the data storage unit. The processing unit controls a rotation speed of the at least one fan according to the at least one temperature and the first fan rotation speed evaluation rule, and determines whether a preset condition is met or not. When the preset condition is met, the processing unit controls the rotation speed of the at least one fan according to the at least one temperature and the second fan rotation speed evaluation rule.

One embodiment of the present invention is a fan rotation speed control method for a battery energy station, which is applicable to the battery energy station used for storing and charging a plurality of batteries. First, a first fan rotation speed evaluation rule and a second fan rotation speed evaluation rule are provided in the battery energy station, wherein the first fan rotation speed evaluation rule and the second fan rotation speed evaluation rule are different, and the first fan rotation speed evaluation rule and the second fan rotation speed evaluation rule each define a corresponding fan rotation speed at at least one temperature. Next, a temperature is detected using at least one temperature sensor of the battery energy station. The battery energy station controls a rotation speed of the at least one fan in the battery energy station according to the at least one temperature and the first fan rotation speed evaluation rule. Next, the battery energy station determines whether a preset condition is met. When the preset condition is met, the battery energy station controls the rotation speed of the at least one fan in the battery energy station based on the at least one temperature and the second fan rotation speed evaluation rule.

In some embodiments, a location attribute corresponding to a battery energy station is obtained. Then, it is determined whether the location attribute corresponding to the battery energy station belongs to a residential area. When the location attribute corresponding to the battery energy station belongs to the residential area and the current time falls within the preset time interval, the preset condition is met.

In some embodiments, a sound receiving unit of the battery energy station is used to detect an ambient sound. Then, the battery energy station determines whether a volume of the ambient sound is lower than a preset decibel value. And when the volume of the ambient sound is lower than the preset decibel value, the preset condition is met.

In some embodiments, the first fan rotation speed evaluation rule defines that the corresponding rotation speed of the at least one fan at a first temperature is a designated speed, and the second fan rotation speed evaluation rule defines that the corresponding rotation speed of the at least one fan at a second temperature is the designated speed, the second temperature being higher than the first temperature.

In some embodiments, the first fan rotation speed evaluation rule defines that at a designated temperature, a corresponding rotation speed of the at least one fan is a first speed, and the second fan rotation speed evaluation rule defines that at the designated temperature, the corresponding rotation speed of the at least one fan is a second speed, the first speed being greater than the second speed.

In some embodiments, the battery energy station provides a plurality of charger modules, and each charger module has a temperature sensor to detect a designated temperature corresponding to that charger module. The battery energy station relies on a highest designated temperature, the first fan rotation speed evaluation rule, or the second fan rotation speed evaluation rule to control the rotation speed of the at least one fan in the battery energy station.

In some embodiments, the battery energy station connects to a remote server via a network, and receives the first fan rotation speed evaluation rule and the second fan rotation speed evaluation rule from the remote server.

### BRIEF DESCRIPTION OF THE DRAWINGS

Fig. 1 is a schematic diagram illustrating a battery energy station according to an embodiment of the present invention;
Fig. 2 is a schematic diagram illustrating a data storage unit according to an embodiment of the present invention;
Fig. 3 is a schematic diagram illustrating a data storage unit according to another embodiment of the present invention;
Fig. 4 is a schematic diagram illustrating a battery energy station connected to a remote server via a network according to embodiments of the present invention;
Fig. 5 is a flowchart showing a fan rotation speed control method for a battery energy station according to embodiments of the present invention;
Fig. 6 is a flowchart showing a method of determining whether a preset condition is met according to an embodiment of the present invention; and
Fig. 7 is a flowchart showing a method of determining whether a preset condition is met according to another embodiment of the present invention.

### DETAILED DESCRIPTION OF THE INVENTION

In the following, the technical solutions in the embodiments of the present invention will be clearly and fully described with reference to the drawings in the embodiments of the present invention. Obviously, the described embodiments are only a part of, not all of, the embodiments of the present invention. Based on the embodiments of the present invention, all other embodiments obtained by a person of ordinary skill in the art without creative efforts shall fall within the protection scope of the present invention.

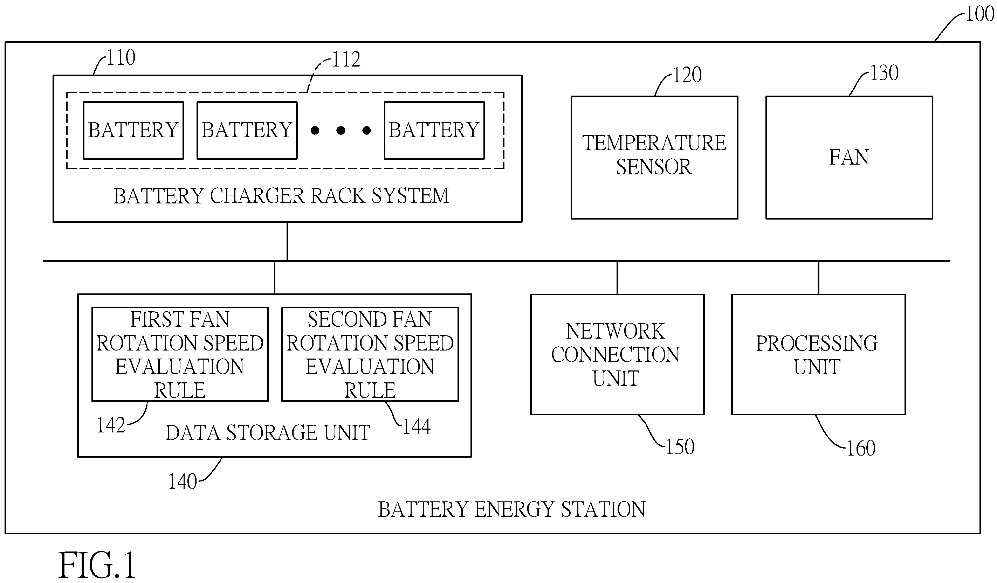

Fig. 1 illustrates a battery energy station according to an embodiment of the present invention. The battery energy station 100 according to the embodiment of the present invention is applicable to an electronic equipment. As illustrated, the battery energy station 100 comprises at least one battery charger rack system 110, at least one temperature sensor 120, at least one fan 130, a data storage unit 140, a network connection unit 150, and a processing unit 160. The battery charger rack system 110 has a particular mechanism (not shown) for storing plural batteries 112 and selectively locking or releasing the batteries. The battery energy station 100 can provide batteries for use by at least one electric equipment, such as an electric motorcycle or an electric vehicle. The battery energy station 100 may have an energy module (not shown) electrically connected to a power grid to obtain a total current for powering the battery energy station and charging the batteries 112 according to signals from the processing unit 160. It should be noted that for each battery 112, the battery charger rack system 110 is equipped with a corresponding charger module, and the charger module has an upper current limit and/or a lower current limit for charging the respective battery. Notably, in some embodiments, the energy module may actively detect a total current supplied to the battery energy station 100 from the power grid and correspondingly notify the processing unit 160 of the total current information. The temperature sensor 120 may detect a temperature. In particular, as mentioned above, the battery energy station 100 may have plural charger modules. In some embodiments, each charger module can have a temperature sensor 120 to detect a designated temperature corresponding to that charger module. In some embodiments, a highest designated temperature may be selected to perform related evaluations and operations of the present invention. The at least one fan 130 is capable of cooling down the battery energy station 100 when in operation. The at least one fan 130 may operate at different speeds according to the control of the processing unit 160. Notably, in some embodiments, the battery energy station 100 may have plural fans, each of which may operate synchronously or independently according to the control of the processing unit 160.

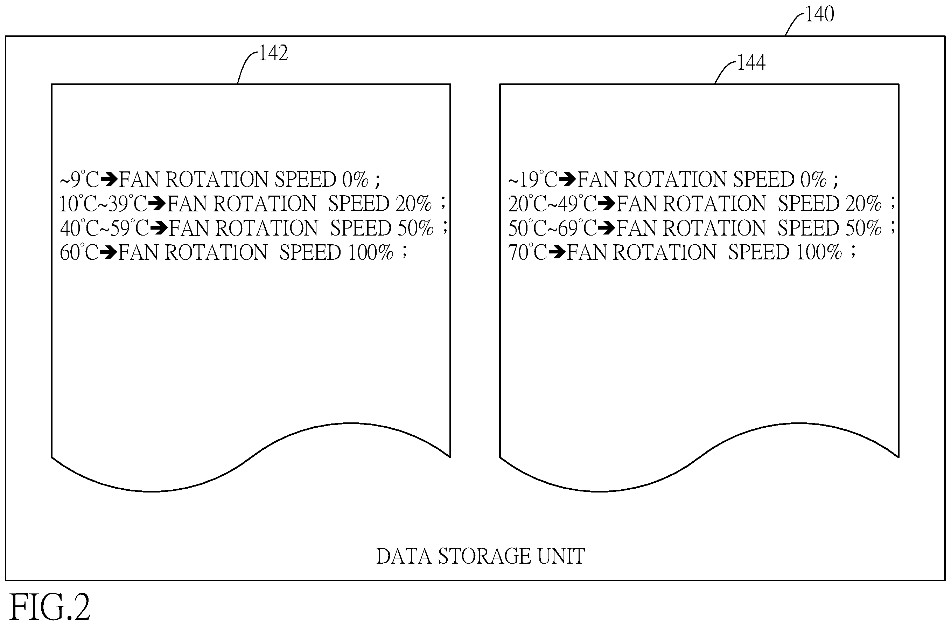

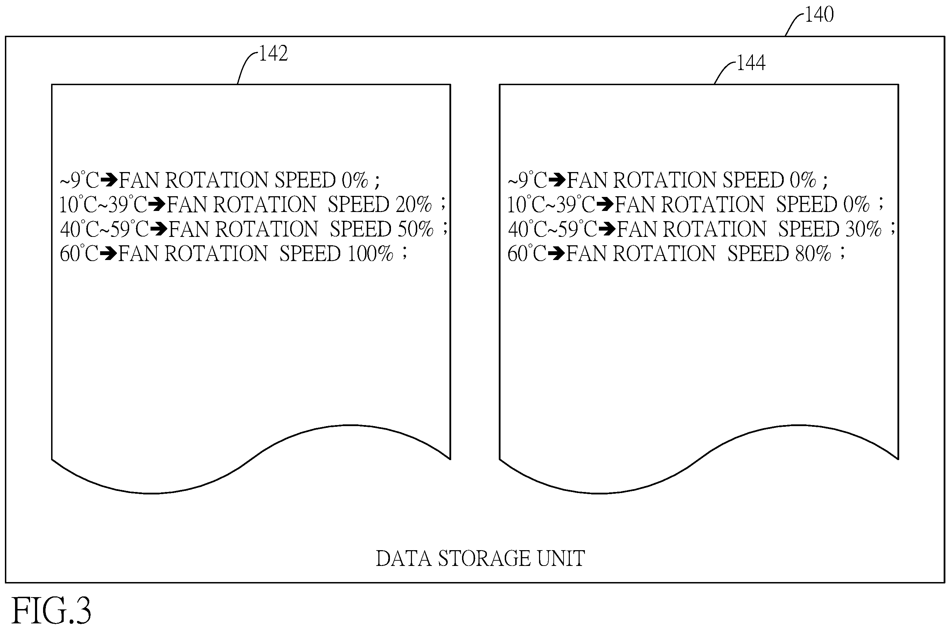

The data storage unit 140 may store a first fan rotation speed evaluation rule 142 and a second fan rotation speed evaluation rule 144. It is reminded that the first fan rotation speed evaluation rule 142 and the second fan rotation speed evaluation rule 144 are different, and that the first fan rotation speed evaluation rule 142 and the second fan rotation speed evaluation rule 144 can each define a corresponding fan rotation speed at at least one temperature. Fig. 2 illustrates the data storage unit according to an embodiment of the present invention, wherein the first fan rotation speed evaluation rule 142 can define that the corresponding rotation speed of the fan at a first temperature is a designated speed, and the second fan rotation speed evaluation rule 144 can define that the corresponding rotation speed of the fan at a second temperature is the designated speed, the second temperature being higher than the first temperature. In other words, in this embodiment the temperature is set differently for an identical fan rotation speed. Fig. 3 shows the data storage unit according to another embodiment of the present invention, wherein the first fan rotation speed evaluation rule 142 defines that at a designated temperature, a corresponding fan rotation speed is a first speed, and the second fan rotation speed evaluation rule 144 defines that at the designated temperature, a corresponding fan rotation speed is a second speed, the first speed being greater than the second speed. In other words, the fan rotation speeds set for the same temperature are different in this embodiment. It is important to note that the fan rotation speed evaluation rules in the foregoing embodiments are only examples of the present invention, and the invention is not limited thereto. As a reminder, in some embodiments, the data storage unit 140 may store a location attribute corresponding to the battery energy station 100. The location attribute may be determined based on the actual location of the battery energy station 100, such as an industrial area, a residential area, an administrative area, a cultural and educational area, and the like. In particular, in some embodiments, the battery energy station 100 may further comprise a sound receiving unit (not shown in the Fig.) for detecting an ambient sound around the battery energy station 100. The use of the location attribute and the ambient sound will be discussed later.

The network connection unit 150 can be connected to a network, such that the battery energy station 100 has a network connection capability. In some embodiments, the network can be a wired network, a telecommunications network, and a wireless network, such as a Wi-Fi network, etc. The processing unit 160 can control the operation of all hardware and software in the battery energy station 100, and can execute the fan rotation speed control method for the battery energy station of the present invention, the details of which will be described later.

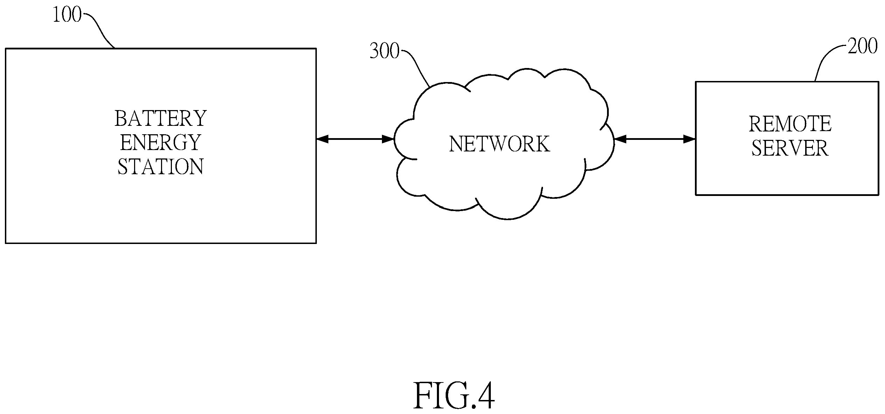

Fig. 4 shows the battery energy station connected to a remote server via a network according to an embodiment of the present invention. Similarly, the battery energy station 100 according to an embodiment of the present invention is suitable for an electronic equipment having plural batteries that can be provided for use in at least one electric equipment, such as an electric motorcycle or an electric vehicle. The battery energy station 100 may have components similar to those shown in FIG. 1, which will not be repeated here. The battery energy station 100 may use the network connection unit 150 to connect to a remote server 200 via a network 300, such as a wired network, a telecommunication network, and a wireless network, such as a Wi-Fi network. As a reminder, in some embodiments, the remote server 200 may simultaneously manage other battery energy stations located at the same location, or at different locations. As mentioned above, the energy module of the battery energy station 100 can actively detect the total current supplied to the battery energy station 100 from the power grid and communicate the corresponding total current information to the processing unit 160. In some embodiments, the remote server 200 may also notify the battery energy station 100 of the corresponding total current via the network 300. In some embodiments, the battery energy station 100 may connect to the remote server 200 via the network 300 and receive the first fan rotation speed evaluation rule 142 and the second fan rotation speed evaluation rule 144 from the remote server 200. The battery energy station 100 may perform related operations based on the received information.

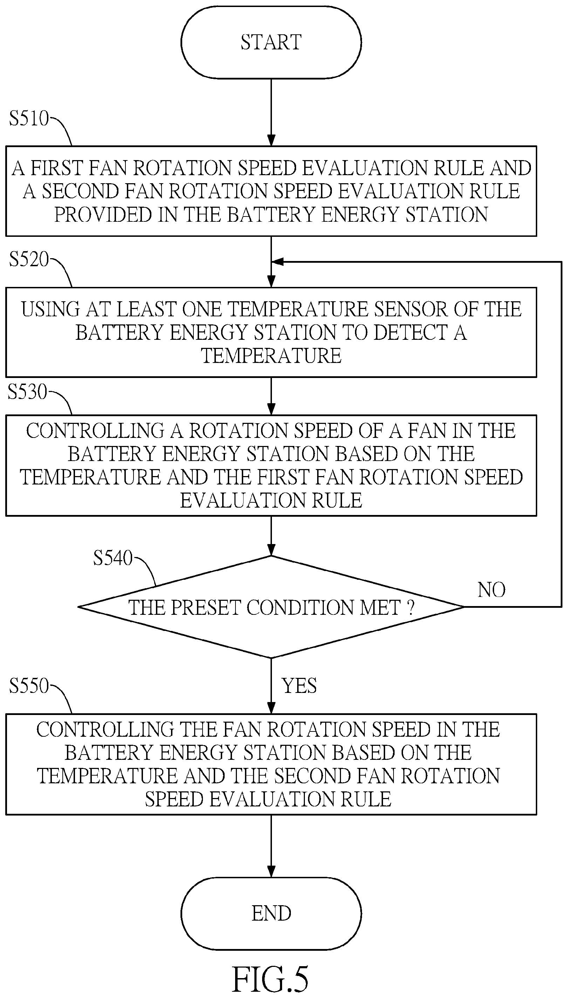

Fig. 5 shows a fan rotation speed control method for the battery energy station according to an embodiment of the present invention. The fan rotation speed control method for the battery energy station according to the embodiment of the present invention is applicable to the battery energy station for storing and charging plural batteries, as shown in FIG. 1.

First, as in step S510, a first fan rotation speed evaluation rule and a second fan rotation speed evaluation rule are provided in the battery energy station, wherein the first fan rotation speed evaluation rule and the second fan rotation speed evaluation rule are different, and the first fan rotation speed evaluation rule and the second fan rotation speed evaluation rule each define a corresponding fan rotation speed at at least one temperature. It should be noted that in some embodiments, the first fan rotation speed evaluation rule and the second fan rotation speed evaluation rule may define different temperatures for the same fan rotation speed. In some embodiments, the first fan rotation speed evaluation rule and the second fan rotation speed evaluation rule may define different fan rotation speeds for the same temperature. Again, it should be noted that the fan rotation speed evaluation rules of the foregoing embodiments are only examples of the present case, and the present invention is not limited thereto.

As in step S520, use at least one temperature sensor of the battery energy station to detect a temperature. Notably, the battery energy station may have plural charger modules, and each charger module has a temperature sensor to detect a designated temperature corresponding to that charger module. The battery energy station can rely on a highest designated temperature as a basis for subsequent evaluation and management. Next, as in step S530, the battery energy station controls a rotation speed of at least one fan in the battery energy station based on the temperature and the first fan rotation speed evaluation rule. Then, as in step S540, the battery energy station determines whether a preset condition is met. When the preset condition is not met ("No" in step S540), the process returns to step S520, and when the preset condition is met ("Yes" in step S540), the battery energy station controls the rotation speed of the fan in the battery energy station based on the temperature and the second fan rotation speed evaluation rule, as in step S550. In other words, the battery energy station determines whether a preset condition is met, and automatically switches between different fan rotation speed evaluation rules to control the fan rotation speed in the battery energy station if the preset condition is met.

It should be noted that the preset conditions can be designed according to different needs and applications. This present invention is not limited to any preset conditions. Two examples of preset conditions are given below.

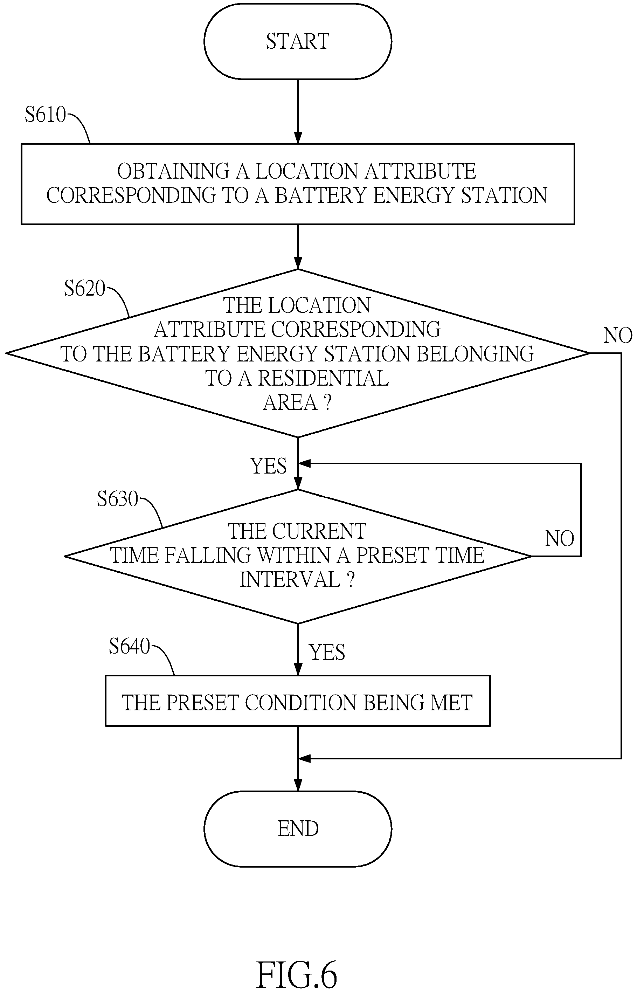

FIG. 6 shows a method of determining whether or not a preset condition is met according to an embodiment of the present invention. First, as in step S610, a location attribute corresponding to a battery energy station is obtained. Then, as in step S620, it is determined whether the location attribute corresponding to the battery energy station belongs to a residential area. When the location attribute corresponding to the battery energy station does not belong to the residential area ("No" in step S620), the process ends. When the location attribute corresponding to the battery energy station belongs to the residential area ("Yes" in step S620), as in step S630, obtain a current time and determine whether the current time falls within a preset time interval, such as 20:00 to 06:00. When the current time does not fall within the preset time interval ("No" in step S630), continue with the determination in step S630. When the current time falls within the preset time interval ("Yes" in step S630), determine that the preset condition is met as in step S640.

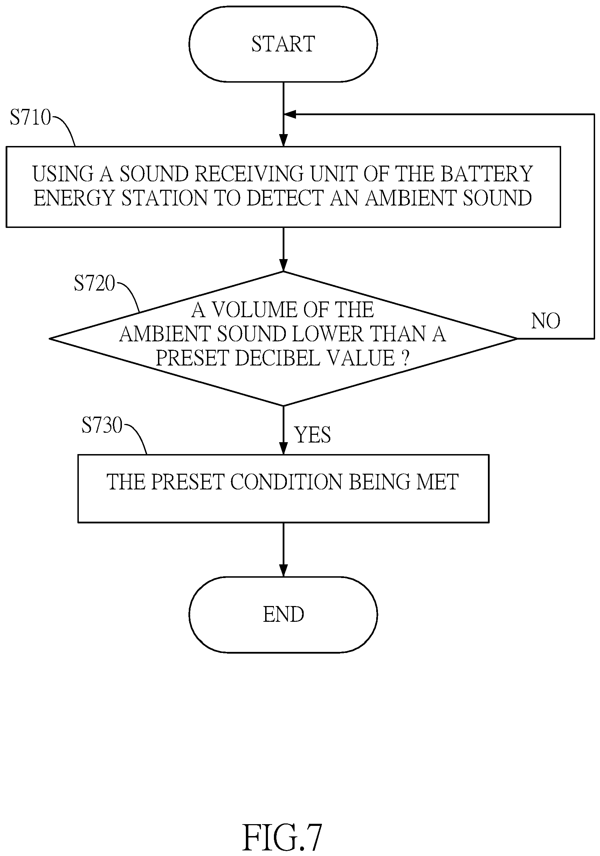

FIG. 7 illustrates a method of determining whether a preset condition is met according to another embodiment of the present invention. First, as in step S710, use a sound receiving unit of the battery energy station to detect an ambient sound. Then, as in step S720, the battery energy station determines whether a volume of the ambient sound is lower than a preset decibel value. When the volume of the ambient sound is not lower than the preset decibel value ("No" in Step S720), the process returns to Step S710, and when the volume of the ambient sound is lower than the preset decibel value ("Yes" in Step S720), the preset condition is met as in Step S730.

It should be noted that the foregoing examples of determining preset conditions are only examples of the present invention, and the present invention is not limited thereto. The preset conditions can be designed according to different needs and applications. Therefore, by means of the fan rotation speed control method for a battery energy station and the battery energy station thereof of the present invention used herein, the fan rotation speed of the battery energy station can be automatically controlled when the preset conditions are met, thus the convenience of the user and the effect of noise on the neighbors under the condition of stable operation of the system are taken care of.

The aforementioned are preferred embodiments of the present invention. It should be noted that for those of ordinary skill in the art, without departing from the principles of the present invention, certain improvements and retouches of the present invention can still be made, which are nevertheless considered as within the protection scope of the present invention.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A fan rotation speed control method for a battery energy station, applicable to the battery energy station (100) for receiving and charging a plurality of batteries (112), **characterized in that** the fan rotation speed control method comprises steps of:
providing a first fan rotation speed evaluation rule (142) and a second fan rotation speed evaluation rule (144) in the battery energy station (100), wherein the first fan rotation speed evaluation rule (142) and the second fan rotation speed evaluation rule (144) are different, and the first fan rotation speed evaluation rule (142) and the second fan rotation speed evaluation rule (144) each define a corresponding fan rotation speed at at least one temperature;
detecting a temperature using at least one temperature sensor (120) of the battery energy station (100) ;
the battery energy station (100) controlling a rotation speed of at least one fan (130) in the battery energy station (100) according to the at least one temperature and the first fan rotation speed evaluation rule (142);
the battery energy station (100) determining whether a preset condition is met; and
when the preset condition is met, the battery energy station (100) controlling the rotation speed of the at least one fan (130) in the battery energy station (100) according to the at least one temperature and the second fan rotation speed evaluation rule (144).

2. The fan rotation speed control method for the battery energy station as claimed in claim 1, further comprising the following steps:
obtaining a location attribute corresponding to the battery energy station (100);
determining whether the location attribute corresponding to the battery energy station (100) belongs to a residential area; and
if the location attribute corresponding to the battery energy station (100) belongs to the residential area, and if a current time falls within a preset time interval, then the preset condition being met.

3. The fan rotation speed control method for the battery energy station as claimed in claim 1, further comprises the following steps:
detecting an ambient sound using a sound receiving unit of the battery energy station (100);
the battery energy station (100) determining whether a volume of the ambient sound is lower than a preset decibel value; and
when the volume of the ambient sound is lower than the preset decibel value, the preset condition being met.

4. The fan rotation speed control method for the battery energy station as claimed in claim 1, wherein the first fan rotation speed evaluation rule (142) defines that the corresponding rotation speed of the at least one fan (130) at a first temperature is a designated speed, and the second fan rotation speed evaluation rule (144) defines that the corresponding rotation speed of the at least one fan (130) at a second temperature is the designated speed, the second temperature being higher than the first temperature.

5. The fan rotation speed control method for the battery energy station as claimed in claim 1, wherein the first fan rotation speed evaluation rule (142) defines that at a designated temperature, a corresponding rotation speed of the at least one fan (130) is a first speed, and the second fan rotation speed evaluation rule (144) defines that at the designated temperature, a corresponding rotation speed of the at least one fan (130) is a second speed, the first speed being greater than the second speed.

6. The fan rotation speed control method for the battery energy station as claimed in claim 1, further comprising the following steps:
providing a plurality of charger modules in the battery energy station (100), and each charger module having a temperature sensor (120) to detect a designated temperature corresponding to that charger module; and
the battery energy station (100) controlling the rotation speed of the at least one fan (130) in the battery energy station (100) based on a highest designated temperature and the first fan rotation speed evaluation rule (142) or the second fan rotation speed evaluation rule (144) .

7. The fan rotation speed control method for the battery energy station as claimed in claim 1, further comprising the following steps:
the battery energy station (100) connecting to a remote server (200) via a network (300); and
the battery energy station (100) receiving the first fan rotation speed evaluation rule (142) and the second fan rotation speed evaluation rule (144) from the remote server (200).

8. A battery energy station, **characterized in that** the battery energy station comprises:
at least one temperature sensor (120) for detecting a temperature;
at least one fan (130);
a battery charger rack system (110), comprising a plurality of batteries (112);
a data storage unit (140) comprising a first fan rotation speed evaluation rule (142) and a second fan rotation speed evaluation rule (144), wherein the first fan rotation speed evaluation rule (142) and the second fan rotation speed evaluation rule (144) are different, and the first fan rotation speed evaluation rule (142) and the second fan rotation speed evaluation rule (144) each define a corresponding fan rotation speed at at least one temperature; and
a processing unit (160) connected to the at least one temperature sensor (120), the at least one fan (130), the battery charger rack system (110), and the data storage unit (140) to control a rotation speed of the at least one fan (130) according to the at least one temperature and the first fan rotation speed evaluation rule (142), and to determine whether a preset condition is met, when the preset condition is met, controlling the rotation speed of the at least one fan (130) according to the at least one temperature and the second fan rotation speed evaluation rule (144).

9. The battery energy station as claimed in claim 8, wherein the processing unit (160) obtains a location attribute corresponding to the battery energy station (100), and determines whether the location attribute corresponding to the battery energy station (100) belongs to a residential area, and when the location attribute corresponding to the battery energy station (100) belongs to the residential area and a current time falls within a preset time interval, the preset condition is met.

10. The battery energy station as claimed in claim 8, further comprising a sound receiving unit for detecting an ambient sound, wherein the processing unit (160) determines whether a volume of the ambient sound is lower than a preset decibel value, and when the volume of the ambient sound is lower than the preset decibel value, the preset condition is met.
